# EUROPÄISCHE PATENTSCHRIFT

(11) **EP 2 037 292 B1**
(45) Veröffentlichungstag und Bekanntmachung des Hinweises auf die Patenterteilung: **25.01.2017**
(21) Anmeldenummer: 08012440.7
(22) Anmeldetag: 10.07.2008
(51) Int. Cl.: G10K 11/00, G01S 7/521

(54) **Einbauanordnung für ein schwingungsempfindliches Bauteil, insbesondere eines Ultraschallwandlers, und Verfahren zum Einbau des Bauteils**
Mounting device for a rotation-sensitive component, in particular an ultrasound converter, and method for mounting the component
Ensemble d'encastrement pour un composant sensible aux oscillations, en particulier un transducteur à ultrasons, et procédé d'intégration du composant

(30) Priorität: 12.09.2007 DE 102007043500
(43) Veröffentlichungstag der Anmeldung: 18.03.2009
(73) Patentinhaber: Valeo Schalter und Sensoren GmbH, 74321 Bietigheim-Bissingen (DE)
(72) Erfinder: Gotzig, Heinrich, 74081 Heilbronn (DE); Wehling, Hans Wilhelm, 74074 Heilbronn (DE); Gruendl, Dietmar, 71679 Asperg (DE); Rostocki, Paul David, 74177 Bad Friedrichshall (DE)

(56) Entgegenhaltungen:
- DE-A1- 19 744 229
- DE-C1- 19 927 797

## Beschreibung

### Stand der Technik

Die Erfindung betrifft eine Einbauanordnung für ein schwingungsempfindliches Bauteil, insbesondere zum Einbau eines Ultraschallwandlers in Teile einer Fahrzeugkarosserie, nach der Gattung des Haupt- und der Nebenansprüche.

Bei bisher üblichen Einbauanordnungen für ein schwingungsempfindliches Bauteil, wie zum Beispiel bei ultraschallbasierenden Umfelderkennungssystemen für Einparkhilfen für Fahrzeuge, werden mindestens ein Ultraschallwandler oder mehrere vorzugsweise in der vorderen und/oder hinteren Stoßstange eines Kraftfahrzeuges verbaut. Jeder Ultraschallwandler sendet dabei ein Ultraschallsignal aus, welches von einem möglichen Hindernis reflektiert wird und von dem gleichen Ultraschallwandler und oder von weiteren Ultraschallwandlern empfangen werden kann.

Um nicht im Empfänger des Ultraschallwandlers durch das eigene ausgesendete Signal oder durch andere Ultraschallwandler gestört zu werden muss der schwingende Ultraschallwandler gegen die harte Umgebung mechanisch entkoppelt, das heißt weich getrennt werden. Dieses wird üblicherweise mit einem lose auf den Sensor aufgesteckten runden Entkopplungsring, beispielsweise aus silikonartigem Material, gelöst.

Beispielsweise ist aus der DE 102 37 721 A1 ist bekannt, dass eine Einbauvorrichtung zum schwingungsgedämpften Einbau eines solchen Wandlers eine elastische Entkopplungsvorrichtung aufweist, die zwischen dem Sensor und dem den Sensor aufnehmenden Bauelement angeordnet ist. Hierbei ist eine besondere Oberflächenstruktur der Entkopplungsvorrichtung vorgesehen, die eine dauerhaft gute Entkopplung zwischen der Sensoreinrichtung und dem aufnehmenden Bauelement gewährleisten soll.

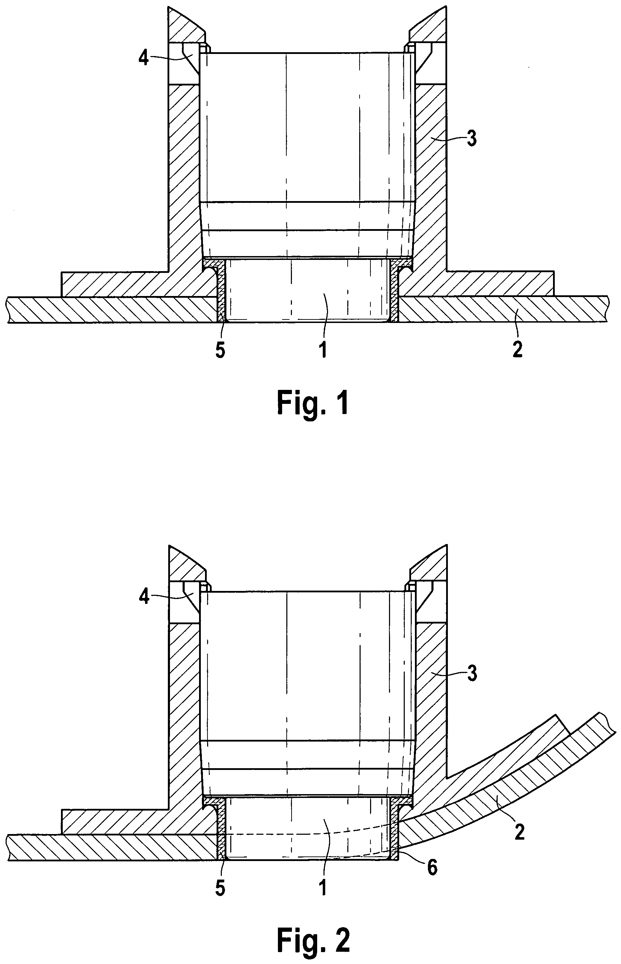

Aus Figur 1 ist ein bisher üblicher Einbau eines Ultraschallwandlers 1 in ein Karosserieteil eines Kraftfahrzeuges, hier eine Stoßstange 2, gezeigt, bei dem ein Halter 3 vorhanden ist, der hinten der Stoßstange 2 befestigt ist, zum Beispiel durch Schweißen, und über eine Verrastung 4 mit dem Ultraschallwandler 1 haltbar verbunden wird. Zur mechanischen Entkopplung des Ultraschallwandlers 1 von der Stoßstange 2 und dem Halter 3 ist ein Entkopplungsring 5, beispielweise aus einem silikonartigem Material, vorgesehen, der Schwingungen von der Stoßstange 2 zum Sensor 1 ausreichend dämpft.

Bei der Einbauart nach Figur 2 ragt in der bisher üblichen Einbauweise bei einer Stoßstange 2 mit einem Krümmungsradius ein Anteil 6 des Entkopplungsrings 5 aus der Stoßstange 2 hervor, so dass bei dieser Montageart der Nachteil auftritt, dass es Grenzfälle durch das Design der Stoßstange 2 bei kleinen Radien gibt, bei denen der Entkopplungsring 5 mit einem Anteil 6 an einer Seite etwas vorsteht. Dadurch kann es vorkommen, dass beispielsweise in Waschstraßen für das Kraftfahrzeug oder durch festes Reiben mit einem stumpfen Lederlappen der Entkopplungsring 5 verloren geht. Im übrigen sind oft auch die vorderen Einbaubegrenzungen des Entkopplungsrings 5 auch aus festem Kunststoff hergestellt, die in nachteiliger Weise einen Teil der Schwingungen an die Umgebung weitergeben.

### Darstellung der Erfindung

Die Erfindung geht von einer Einbauanordnung für ein schwingungsempfindliches Bauteil mit einem Halter für das Bauteil und einem Entkopplungsteil aus, das zwischen dem Bauteil und dem Halter liegt. Erfindungemäß wird vorgeschlagen, dass das Entkopplungsteil über mindestes eine Rastnase verfügt, die jeweils in eine entsprechende Aussparung des Halters in vorteilhafter Weise einrastbar ist. Vorzugsweis ist dabei das Entkopplungsteil ein der runden Geometrie des Bauteils angepasster Entkopplungsring, der einen vorgegebenen Bereich in die Längserstreckung des Bauteils und des Wandlers hereingeführt ist und die Rastnasen sind auf seinem Umfang verteilt.

Gemäß einer bevorzugten Ausführungsform ist das Bauteil ein Ultraschallwandler, der mittels des Halters und des Entkopplungsrings in die Stoßstange eines Fahrzeugs integrierbar ist, wobei eine offene Detektionsfläche des Ultraschallwandlers weitestgehend eben mit der Stoßstange und dem Entkopplungsteil abschließt. Der Ultraschallwandler kann zum Beispiel Bestandteil eines Abstands- oder Umfelderkennungssystems für ein Parkassistenzsystems bei einem Fahrzeug sein.

Die Stoßstange des Fahrzeugs kann im weitesten Sinne gerade geführt sein oder auch an mindestens einer Seite des Ultraschallwandlers mit einem Krümmungsradius von diesem wegführt sein, wobei dann das Entkopplungsring erfindungsgemäß im Bereich der Detektionsfläche des Ultraschallwandlers eine der Kontur der Stoßstange folgende Kontur aufweist. Die Rastnasen des Entkopplungsrings und die Aussparung des Halters können dabei in vorteilhafter Weise so angeordnet werden, dass eine eindeutige und verdrehsichere Einbaulage des Entkopplungsrings gebildet ist.

Mit der Erfindung ist somit eine Entkopplungsgeometrie für ein schwingungsempfindliches Bauteil gefunden, die fest und eindeutig in der Einbauanordnung anordbar und zusätzlich auch noch unverlierbar ist. Es ist somit eine Falschmontage, zum Beispiel, dass der Entkopplungsring zu weit aus der Stoßstange des Fahrzeugs herausragt oder verknickt ist, weitgehend ausgeschlossen.

Darüber hinaus kann auch der vordere Anschlag der Einbauposition mit dem Entkopplungsring weich ausgeführt werden um so die Übertragen von Körperschall zu reduzieren. Durch diese vorteilhafte, beispielsweise der Stoßstange angepassten geschlossenen Geometrie kann auch sonst in den Ritzen stehendes Wasser bei tiefen Temperaturen auch nicht zu Fehlsignalen führen. Vorteilhaft ist es dabei, wenn das Entkopplungsteil aus Silikon hergestellt ist.

Bei einem vorteilhaften Verfahren zum Einbau eines Ultraschallwandlers in die Stoßstange eines Fahrzeuges wird in einem ersten Schritt der Halter vorzugsweise an die Stoßstange eines Kraftfahrzeuges im Bereich einer Ausnehmung für den Ultraschallwandler angeschweißt oder auch angeklebt, in einem zweiten Schritt wird der Entkopplungsring in den Halter eingedrückt und/oder eingerastet und in einem dritten Schritt wird der Ultraschallwandler in den Halter eingerastet. Alternativ kann dabei auch in einem zweiten Schritt wird der Ultraschallwandler in den Halter eingerastet und in einem dritten Schritt eine Kunststoffmasse zur Bildung des Entkopplungsrings zwischen den Halter und den Ultraschallwandler eingespritzt werden.

Es ist hierbei auch möglich, dass eine Mehrzahl von Haltern in gemeinsamen Herstellungsschritten, vorzugsweise an die Stoßstange eines Kraftfahrzeuges im Bereich einer Ausnehmung für den Ultraschallwandler angeschweißt oder angeklebt wird und dann die weiteren zuvor beschriebenen Herstellungsschritte folgen.

Gemäß einer ersten Alternative kann auch in einem ersten Schritt die Kunststoffmasse zur Bildung des Entkopplungsrings zwischen den Halter und den Ultraschallwandler eingespritzt werden, in einem zweiten Schritt der Halter vorzugsweise an die Stoßstange des Kraftfahrzeuges im Bereich einer Ausnehmung für den Ultraschallwandler angeschweißt oder angeklebt werden und in einem drittem Schritt wird der Ultraschallwandler in den Halter eingerastet oder eingesteckt. Die ist insbesondere dadurch vorteilhaft, da die Montage des Halters an der Stoßstange ein Herstellungsschritt des Stoßstangenherstellers ist und die Montage des Ultraschallwandlers während der Endmontage bei Kraftfahrzeughersteller erfolgt.

Weiterhin kann die Herstellung auch derart erfolgen, dass in einem ersten Schritt der Ultraschallwandler in den Halter eingerastet oder eingesteckt wird, in einem zweiten Schritt die Kunststoffmasse zur Bildung des Entkopplungsrings zwischen den Halter und den Ultraschallwandler eingespritzt wird und in einem dritten Schritt der Halter vorzugsweise an die Stoßstange eines Kraftfahrzeuges im Bereich einer Ausnehmung für den Ultraschallwandler angeschweißt oder angeklebt wird.

Das erfindungsgemäße Entkopplungsteil oder -ring kann auf einfache Weise so groß gewählt werden, dass es durch die vordere Bohrung nicht herausgezogen werden kann. Eine Falschmontage ist auch deswegen weitgehend vermieden, weil erst wenn der Entkopplungsring im Halter montiert ist, das Bauteil bzw. der Ultraschallwandler in den Halter passt. Bei falscher Montage ist der Halter für den Ultraschallwandler zu klein und der Ultraschallwandler kann nicht eingerastet werden.

### Kurze Beschreibung der Zeichnung

Ein Ausführungsbeispiel der Erfindung wird anhand der Figuren der Zeichnung erläutert. Es zeigen:
Figur 1 einen Schnitt durch eine in üblicher Weise aufgebaute Einbauordnung für einen Ultraschallwandler als schwingungsempfindliches Bauteil mit einem bekannten Entkopplungsring,
Figur 2 eine Abwandlung der Ansicht nach der Figur 1 bei einer Anwendung in einer Stoßstange eines Kraftfahrzeuges mit einem Krümmungsradius,
Figur 3 einen Schnitt durch eine erfindungsgemäße Einbauordnung für einen Ultraschallwandler als schwingungsempfindliches Bauteil mit einem im Halter verrasten Entkopplungsring und
Figur 4 eine Abwandlung der Ansicht nach der Figur 3 bei einer Anwendung in einer Stoßstange eines Kraftfahrzeuges mit einem Krümmungsradius.

### Wege zur Ausführung der Erfindung

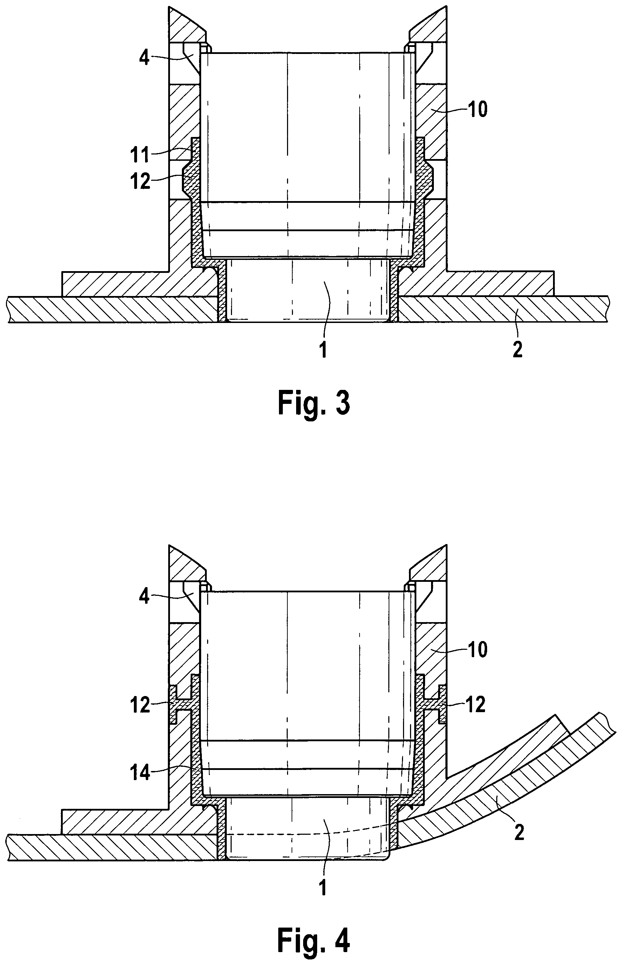

Aus Figur 3 ist eine erste gegenüber der Darstellung nach der in der Beschreibungseinleitung erläuterten Figur1 erfindungsgemäß verbesserte Einbauanordnung zu entnehmen, bei der auch hier der Sensor 1 in ein Karosserieteil eines Kraftfahrzeuges, hier eine Stoßstange 2, eingebaut ist. Ein erfindungsgemäßer Halter 10 ist auch hier hinter der Stoßstange 2 befestigt und ist über eine Verrastung 4 mit dem Ultraschallwandler 1 haltbar verbunden.

Zur mechanischen Entkopplung des Ultraschallwandlers 1 von der Stoßstange 2 und dem Halter 3 ist ein Entkopplungsring 11, beispielweise aus einem silikonartigem Material, in den hinteren Bereich des Halters 10 erstreckt und mit Verrastungen 12 drehsicherer und in eindeutiger Einbaulage versehen, wobei auch hier die Schwingungen von der Stoßstange 2 zum Sensor 1 ausreichend gedämpft sind. Die Verrastungen 12 verfügen über mindestens eine Rastnase, die jeweils in eine entsprechende Aussparung des Halters 10 einrastbar ist.

Bei der erfindungsgemäßen Einbauart nach Figur 4 weist die Stoßstange 2 an der rechten Seite einen Krümmungsradius auf, wobei jedoch hier im Gegensatz zu der vorher üblichen Einbauart ein Entkopplungsring 14 nicht aus der Stoßstange 2 hervortritt, da der Entkopplungsring 14 in der richtigen Einbaulage der Kontur der Stoßstange 2 angepasst angebracht werden kann. Beim Ausführungsbeispiel nach der Figur 4 ist der Entkopplungsring 14 von außen in den Halter 10, d.h. in den Zwischenraum zum Ultraschallwandler 1 eingespritzt, so dass auch hier eine einfache Anpassung der Kontur des Entkopplungsrings 14 an die Kontur der Stoßstange 2 vorgenommen werden kann.

## Patentansprüche

1. Einbauanordnung für ein schwingungsempfindliches Bauteil mit einem Halter (10) für das Bauteil und einem Entkopplungsteil, das zwischen dem Bauteil und dem Halter liegt, **dadurch gekennzeichnet, dass** das Bauteil ein Ultraschallwandler (1) ist, der mittels des Halters (10) und des Entkopplungsteils in eine Stoßstange (2) eines Fahrzeugs integrierbar ist, wobei eine Detektionsfläche des Ultraschallwandlers (1) weitestgehend eben mit der Stoßstange (2) und dem Entkopplungsteil abschließt, und das Entkopplungsteil über eine Verrastung (12) mit mindestes einer Rastnase verfügt, die jeweils in eine entsprechende Aussparung des Halters (10) einrastbar ist, und das Entkopplungsteil ein der runden Geometrie des Bauteils angepasster Entkopplungsring (11 ;14) ist, der einen vorgegebenen Bereich in die Längserstreckung des Bauteils hereingeführt ist und die Verrastungen (12) auf seinem Umfang verteilt sind.

2. Einbauanordnung nach Anspruch 1, wobei die Stoßstange (2) des Fahrzeugs an mindestens einer Seite des Ultraschallwandlers (1) mit einem Krümmungsradius von diesem wegführt und dass der Entkopplungsring (11 ;14) im Bereich der Detektionsfläche des Ultraschallwandlers (1) eine der Kontur der Stoßstange (2) folgende Kontur aufweist.

3. Einbauanordnung nach einem der vorhergehenden Ansprüche, wobei die Verrastungen (12) des Entkopplungsteils und des Halters (10) so angeordnet sind, dass eine eindeutige und verdrehsichere Einbaulage des Entkopplungsteils gebildet ist.

4. Einbauanordnung nach einem der vorhergehenden Ansprüche, wobei das Entkopplungsteil aus Silikon hergestellt ist.

5. Einbauanordnung nach einem der vorhergehenden Ansprüche, wobei das Entkopplungsteil als Kunststoffmasse zwischen das Bauteil und den Halter (10) einschließlich der Aussparungen für die Verrastungen (12) eingespritzt ist.

6. Einbauanordnung nach einem der vorhergehenden Ansprüche, wobei der Halter (10) hinter der Stoßstange (2) befestigt ist und über eine Verrastung (4) mit dem Ultraschallwandler (1) haltbar verbunden ist.

7. Einbauanordnung nach einem der vorhergehenden Ansprüche, wobei zur mechanischen Entkopplung des Ultraschallwandlers (1) von der Stoßstange (2) und dem Halter (3) der Entkopplungsring (11) in den hinteren Bereich des Halters (10) erstreckt und mit den Verrastungen (12) drehsicher und in eindeutiger Einbaulage versehen ist, wobei die Schwingungen von der Stoßstange (2) zum Ultraschallwandler (1) ausreichend gedämpft sind.

8. Abstands- oder Umfelderkennungssystem für ein Parkassistenzsystem bei einem Fahrzeug umfassend eine Einbauanordnung nach einem der vorhergehenden Ansprüche.

9. Verfahren zum Einbau einer Einbauanordnung nach einem der Ansprüche 1 bis 7.

10. Verfahren nach Anspruch 9, wobei in einem ersten Schritt der Halter (10) an die Stoßstange (2) eines Kraftfahrzeuges im Bereich einer Ausnehmung für den Ultraschallwandler (1) angeschweißt oder angeklebt wird, in einem zweiten Schritt wird der Entkopplungsring (11) in den Halter (10) eingedrückt und/oder eingerastet und in einem dritten Schritt der Ultraschallwandler (1) in den Halter (10) eingerastet wird.

11. Verfahren nach Anspruch 9, wobei in einem ersten Schritt der Halter (10) an die Stoßstange (2) eines Kraftfahrzeuges im Bereich einer Ausnehmung für den Ultraschallwandler (1) angeschweißt oder angeklebt wird, in einem zweiten Schritt wird der Ultraschallwandler (1) in den Halter (10) eingerastet und in einem dritten Schritt wird eine Kunststoffmasse zur Bildung des Entkopplungsrings (14) zwischen den Halter (10) und den Ultraschallwandler (1) eingespritzt.

12. Verfahren nach Anspruch 11, **dadurch gekennzeichnet, dass** eine Mehrzahl von Haltern in gemeinsamen Herstellungsschritten vorzugsweise an die Stoßstange (2) eines Kraftfahrzeuges im Bereich einer Ausnehmung für den Ultraschallwandler (1) angeschweißt oder angeklebt und die weiteren Herstellungsschritte vorgenommen werden.

13. Verfahren nach Anspruch 9, wobei in einem ersten Schritt eine Kunststoffmasse zur Bildung des Entkopplungsrings (14) zwischen den Halter (10) und den Ultraschallwandler (1) eingespritzt wird, in einem zweiten Schritt der Halter (10) an die Stoßstange (2) eines Kraftfahrzeuges im Bereich einer Ausnehmung für den Ultraschallwandler (1) angeschweißt oder angeklebt wird und in einem drittem Schritt der Ultraschallwandler (1) in den Halter (10) eingerastet oder eingesteckt wird.

14. Verfahren nach Anspruch 9, wobei in einem ersten Schritt der Ultraschallwandler (1) in den Halter (10) eingerastet oder eingesteckt wird, in einem zweiten Schritt eine Kunststoffmasse zur Bildung des Entkopplungsrings (14) zwischen den Halter (10) und den Ultraschallwandler (1) eingespritzt wird und in einem dritten Schritt der Halter (10) vorzugsweise an die Stoßstange (2) eines Kraftfahrzeuges im Bereich einer Ausnehmung für den Ultraschallwandler (1) angeschweißt oder angeklebt wird.

## Claims

1. Mounting arrangement for a vibration-sensitive component, having a holder (10) for the component and a decoupling part which is located between the component and the holder, **characterized in that** the component is an ultrasonic transducer (1), which can be integrated into a bumper (2) of a vehicle by means of the holder (10) and the decoupling part, wherein a detection surface of the ultrasonic transducer (1) ends as far as possible level with the bumper (2) and the decoupling part, and the decoupling part has a latching means (12) with at least one latching lug, which can each be latched into a corresponding cut-out in the holder (10), and the decoupling part is a decoupling ring (11; 14) matched to the round geometry of the component, which is guided into a predefined area in the longitudinal extent of the component, and the latching means (12) are distributed over its circumference.

2. Mounting arrangement according to Claim 1, wherein the bumper (2) of the vehicle on at least one side of the ultrasonic transducer (1) leads away from the latter with a radius of curvature, and that the decoupling ring (11; 14) in the area of the detection surface of the ultrasonic transducer (1) has a contour following the contour of the bumper (2).

3. Mounting arrangement according to one of the preceding claims, wherein the latching means (12) of the decoupling part and of the holder (10) are arranged such that an unambiguous and rotationally secure mounted position of the decoupling part is formed.

4. Mounting arrangement according to one of the preceding claims, wherein the decoupling part is produced from silicone.

5. Mounting arrangement according to one of the preceding claims, wherein the decoupling part is injected as a plastic compound between the component and the holder (10), including the cutouts for the latching means (12).

6. Mounting arrangement according to one of the preceding claims, wherein the holder (10) is fixed behind the bumper (2) and is durably connected to the ultrasonic transducer (1) via a latching means (4).

7. Mounting arrangement according to one of the preceding claims, wherein, for the purpose of mechanical decoupling of the ultrasonic transducer (1) from the bumper (2) and the holder (3), the decoupling ring (11) extends into the rear region of the holder (10) and is provided with the latching means (12) in a rotationally secure manner and in an unambiguous mounted position, wherein the vibrations from the bumper (2) to the ultrasonic transducer (1) are adequately damped.

8. Distance or environment detection system for a parking assistance system in a vehicle, comprising a mounting arrangement according to one of the preceding claims.

9. Method for mounting a mounting arrangement according to one of Claims 1 to 7.

10. Method according to Claim 9, wherein, in a first step, the holder (10) is welded or adhesively bonded onto the bumper (2) of a motor vehicle in the region of a cut-out for the ultrasonic transducer (1), in a second step, the decoupling ring (11) is pressed and/or latched into the holder (10) and, in a third step, the ultrasonic transducer (1) is latched into the holder (10).

11. Method according to Claim 9, wherein, in a first step, the holder (10) is welded or adhesively bonded onto the bumper (2) of a motor vehicle in the region of a cut-out for the ultrasonic transducer (1), in a second step, the ultrasonic transducer (1) is latched into the holder (10) and, in a third step, a plastic compound for forming the decoupling ring (14) is injected in between the holder (10) and the ultrasonic transducer (1).

12. Method according to Claim 11, **characterized in that**, in common production steps, a plurality of holders are preferably welded or adhesively bonded onto the bumper (2) of a motor vehicle in the region of a cut-out for the ultrasonic transducer (1), and the further production steps are performed.

13. Method according to Claim 9, wherein, in a first step, a plastic compound for forming the decoupling ring (14) is injected in between the holder (10) and the ultrasonic transducer (1), in a second step, the holder (10) is welded or adhesively bonded onto the bumper (2) of a motor vehicle in the region of a cut-out for the ultrasonic transducer (1), and, in a third step, the ultrasonic transducer (1) is latched or plugged into the holder (10).

14. Method according to Claim 19, wherein, in a first step, the ultrasonic transducer (1) is latched or plugged into the holder (10), in a second step a plastic compound for forming the decoupling ring (14) is injected in between the holder (10) and the ultrasonic transducer (1) and, in a third step, the holder (10) is welded or adhesively bonded onto the bumper (2) of a motor vehicle in the region of a cut-out for the ultrasonic transducer (1).

## Revendications

1. Ensemble d'encastrement pour un composant sensible aux oscillations avec un support (10) pour le composant et une partie de découplage, qui est placée entre le composant et le support, **caractérisé en ce que** le composant est un transducteur à ultrasons (1), qui peut être intégré dans un pare-chocs (2) d'un véhicule au moyen du support (10) et de la partie de découplage, dans lequel une face de détection du transducteur à ultrasons (1) se termine très largement dans un plan avec le pare-chocs (2) et la partie de découplage, et la partie de découplage est dotée d'un enclenchement (12) avec au moins un ergot d'encliquetage, qui peut être encliqueté respectivement dans un évidement correspondant du support (10), et la partie de découplage est un anneau de découplage (11; 14) adapté à la géométrie ronde du composant, qui est introduit d'une distance prédéterminée dans l'extension longitudinale du composant et les enclenchements (12) sont répartis sur son pourtour.

2. Ensemble d'encastrement selon la revendication 1, dans lequel le pare-chocs (2) du véhicule s'écarte du transducteur à ultrasons (1) avec un rayon de courbure sur au moins un côté de celui-ci et en ce que l'anneau de découplage (11; 14) présente dans la région de la face de détection du transducteur à ultrasons (1) un contour épousant le contour du pare-chocs (2).

3. Ensemble d'encastrement selon l'une quelconque des revendications précédentes, dans lequel les enclenchements (12) de la partie de découplage et du support (10) sont disposés de telle manière qu'une position de montage claire et sans rotation de la partie de découplage soit formée.

4. Ensemble d'encastrement selon l'une quelconque des revendications précédentes, dans lequel la partie de découplage est fabriquée en silicone.

5. Ensemble d'encastrement selon l'une quelconque des revendications précédentes, dans lequel la partie de découplage est injectée sous la forme d'une masse de matière plastique entre le composant et le support (10) y compris les évidements pour les enclenchements (12).

6. Ensemble d'encastrement selon l'une quelconque des revendications précédentes, dans lequel le support (10) est fixé derrière le pare-chocs (2) et est assemblé de façon durable au transducteur à ultrasons (1) au moyen d'un enclenchement (4).

7. Ensemble d'encastrement selon l'une quelconque des revendications précédentes, dans lequel l'anneau de découplage (11) s'étend dans la région arrière du support (10), en vue du découplage mécanique du transducteur à ultrasons (1) du pare-chocs (2) et du support (3), et est muni des enclenchements (12) sans rotation et dans une position de montage claire, dans lequel les oscillations du pare-chocs (2) vers le transducteur à ultrasons (1) sont suffisamment amorties.

8. Système de reconnaissance de distance et des abords pour un système d'assistance au stationnement dans un véhicule comprenant un ensemble d'encastrement selon l'une quelconque des revendications précédentes.

9. Procédé de montage d'un ensemble d'encastrement selon l'une quelconque des revendications 1 à 7.

10. Procédé selon la revendication 9, dans lequel dans une première étape on soude ou on colle le support (10) au pare-chocs (2) d'un véhicule automobile dans la région d'un évidement pour le transducteur à ultrasons (1), dans une deuxième étape on enfonce et/ou on encliquète l'anneau de découplage (11) dans le support (10) et dans une troisième étape on encliquète le transducteur à ultrasons (1) dans le support (10).

11. Procédé selon la revendication 9, dans lequel dans une première étape on soude ou on colle le support (10) au pare-chocs (2) d'un véhicule automobile dans la région d'un évidement pour le transducteur à ultrasons (1), dans une deuxième étape on encliquète le transducteur à ultrasons (1) dans le support (10) et dans une troisième étape on injecte une masse de matière plastique pour la formation de l'anneau de découplage (14) entre le support (10) et le transducteur à ultrasons (1).

12. Procédé selon la revendication 11, **caractérisé en ce que** l'on soude ou on colle une multiplicité de supports dans des étapes de fabrication communes de préférence au pare-chocs (2) d'un véhicule automobile dans la région d'un évidement pour le transducteur à ultrasons (1) et on exécute les autres étapes de fabrication.

13. Procédé selon la revendication 9, dans lequel dans une première étape on injecte une masse de matière plastique pour la formation de l'anneau de découplage (14) entre le support (10) et le transducteur à ultrasons (1), dans une deuxième étape on soude ou on colle le support (10) au pare-chocs (2) d'un véhicule automobile et dans une troisième étape on encliquète ou on insère le transducteur à ultrasons (1) dans le support (10).

14. Procédé selon la revendication 9, dans lequel dans une première étape on encliquète ou on insère le transducteur à ultrasons (1) dans le support (10), dans une deuxième étape on injecte une masse de matière plastique pour la formation de l'anneau de découplage (14) entre le support (10) et le transducteur à ultrasons (1) et dans une troisième étape on soude ou on colle le support (10) de préférence au pare-chocs (2) d'un véhicule automobile dans la région d'un évidement pour le transducteur à ultrasons (1).
